# EUROPÄISCHE PATENTSCHRIFT

(11) **EP 1 116 156 B1**
(45) Veröffentlichungstag und Bekanntmachung des Hinweises auf die Patenterteilung: **02.04.2008**
(21) Anmeldenummer: 00952862.1
(22) Anmeldetag: 21.06.2000
(51) Int. Cl.: G06K 7/00

(54) **VORRICHTUNG ZUR ELEKTRISCHEN KONTAKTIERUNG DER KONTAKTFLÄCHEN EINER AUF EINER HORIZONTALEN AUFLAGEFLÄCHE AUFLIEGENDEN CHIPKARTE**
DEVICE FOR ELECTRICALLY CONTACTING CONTACT SURFACES OF A CHIP CARD MOUNTED ON A HORIZONTAL BEARING SURFACE
DISPOSITIF POUR METTRE EN CONTACT ELECTRIQUE LES SURFACES DE CONTACT D'UNE CARTE A PUCE POSEE SUR UNE SURFACE D'APPUI HORIZONTALE

(30) Priorität: 01.07.1999 DE 19930439
(43) Veröffentlichungstag der Anmeldung: 18.07.2001
(73) Patentinhaber: Sagem Orga GmbH, 33106 Paderborn (DE)
(72) Erfinder: OHLERT, Bernd, D-24626 Gross Kummerfeld (DE)
(86) Internationale Anmeldenummer: PCT/DE2000/002031
(87) Internationale Veröffentlichungsnummer: WO 2001/003051

(56) Entgegenhaltungen:
- EP-A- 0 313 093
- EP-A- 0 837 413
- US-A- 5 836 779

## Beschreibung

Die Erfindung bezieht sich auf eine Vorrichtung zur elektrischen Kontaktierung der Kontaktflächen einer auf einer horizontalen Auflagefläche aufliegenden Chipkarte. Mittels der Kontaktflächen ist der IC-Baustein (Chip) der Chipkarte in der Lage, mit aus Sicht des Chips externen Geräten (Kartenschreib- und Lesegeräten) zu kommunizieren. Die gattungsgemäßen Vorrichtungen dienen der elektrischen Verbindung zwischen den Kontaktflächen auf der Chipkarte mit einem Kartenschreib- und Lesegerät. Zu diesem Zweck weist eine solche Vorrichtung elektrische Kontakte auf, die mit den Kontaktflächen auf der Chipkarte in Berührungskontakt gebracht werden, um einen elektrischen Kontakt herzustellen.

Derartige Vorrichtungen finden sich beispielsweise in Kartentelefonen, Bankterminals, Geldausgabeautomaten etc. und in Produktionsanlagen für Chipkarten, wo über Kartenschreib- und Lesegeräte Informationen (Daten) in den Chip eingeschrieben werden.

Aus Kompatibilitätsgründen sind sowohl die äußeren Abmessungen der Chipkarte (Länge, Breite, Dicke) als auch die Größe und die Position der elektrischen Kontaktflächen bezogen auf die Außenkanten der Chipkarte standardisiert. Aus diesem Grunde ist zur Kontaktierung immer eine Positionierung erforderlich. Kartenlänge: 85mm, Breite 54mm; siehe ISO-Normen 7810 und 7816-2).

In der EP-A-0 837 413 wird ein Kartenausrichtungsmechanismus für eine ICC Karte beschrieben, die zwei Arme hat, die wiederum den gleichen Drehpunkt haben und gegeneinander mit einer Feder vorgespannt werden. Einer dieser Arme trägt einen Kartenlesekopf und der andere Arm trägt einen Kartenanschlag. Ein Elektromagnet dreht die Arme um den gemeinsamen Drehpunkt bis der Kartenanschlag des zweiten Armes die Karte berührt. Der erste Arm wird solange weitergedreht, bis die Feder völlig zusammen gedrückt ist und der Kartenlesekopf positionsgenau in Bezug auf die Karte ausgerichtet ist. Wenn der Mechanismus in einem Geldausgabeautomaten eingebaut ist, können die Arme in ihre Ruheposition zurück gezogen werden und die Karte kann ohne Behinderung hinter den Mechanismus zu einem Auffangbehälter bewegt werden.

Beim Einschieben einer Chipkarte in ein Kartentelefon werden die Außenkanten der Chipkarte über feststehende Anschläge in eine bestimmte Position gebracht, in welcher die Kontakte des Kartentelefons mit den Kontaktflächen der Karte in Berührung gebracht werden. Eine derartige Kontaktiervorrichtung ist jedoch für Kartenschreib- und Lesegeräte in Durchlaufsystemen, z.B. in der Produktion, aufgrund der feststehenden Anschläge nicht geeignet. Bei einem Kartenschreib- und Lesegerät in der Produktion, wo z.B. Informationen (Daten) in den Chip eingeschrieben werden, werden die Chipkarten von einer Station (z.B. ein Vorratsmagazin) herantransportiert und anschließend wieder weitertransportiert an eine nächste Station (z.B. ein Ablagemagazin).

Aus diesem Grunde arbeiten Kontaktiervorrichtungen für Durchlaufsysteme mit optischen Sensoren zur Positionsbestimmung der Chipkarte, wobei über die Sensoren der Kartentransport gesteuert wird. Diese Kontaktiervorrichtungen erfordern jedoch eine aufwendige Steuerung sowie eine aufwendige Justage der Sensoren. Darüber hinaus ist eine echte Positionierung der Chipkarte allenfalls in Kartentransportrichtung möglich, da eigentlich nur eine Positionsbestimmung vor der Kontaktierung vorgenommen wird und keine Positionierung.

Aufgabe der Erfindung ist daher die Schaffung einer Kontaktiervorrichtung insbesondere für Durchlaufsysteme, die bei einem geringen Steuerungsaufwand in einfacher und zuverlässiger Weise eine Kontaktierung ermöglicht.

Diese Aufgabe wird durch die kennzeichnenden Merkmale des Patentanspruches 1 gelöst. Die sich daran anschließenden Unteransprüche enthalten vorteilhafte Ausgestaltungen.

Erfindungsgemäß weist die Vorrichtung eine vertikal in Richtung auf die Chipkarte und von dieser weg verfahrbare Kontaktiereinheit auf, die zu den elektrischen Kontaktflächen der Chipkarte korrespondierende Kontakte aufweist, welche mit dem Kartenschreib- und/oder Lesegerät elektrisch verbunden sind. Darüber hinaus sind mindestens vier vertikal in Richtung auf die Chipkarte und von dieser weg verfahrbares Positioniermittel vorgesehen, die in einer definierten Position zu der Kontaktiereinheit angeordnet sind, wobei in der unteren Stellung dieser Positioniermittel jede gerade Außenkante der Chipkarte von mindestens einem Positioniermittel zur Positionierung berührt wird.

Zunächst wird das (die) Positioniermittel auf die Chipkarte abgesenkt. Sobald die Chipkarte über die Berührung einer (oder mehrerer) Außenkante mit dem vertikal verfahrbaren Positioniermittel positioniert wurde, senkt sich auch die Kontaktiereinheit mit den Kontakten auf die Kontaktflächen der Chipkarte ab. Nach dem Datenaustausch zwischen Kartenschreib- und Lesegerät und Chipkarte, wird das Positioniermittel sowie die Kontaktiereinheit wieder nach oben in die Ruhelage verfahren. Nun kann die Chipkarte wieder weitertransportiert werden.

In der erfindungsgemäßen Vorrichtung sind Positionierung, Positionsbestimmung und Kontaktierung in einfacher Weise integriert, wobei gleichzeitig ein An- und Abtransport der Chipkarten ermöglicht wird, da sowohl das (die) Positioniermittel als auch die Kontaktiereinheit aus dem Kartentransportweg heraus verfahrbar sind. Durch die konstruktive Integration von Positionierung, Positionsbestimmung und Kontaktierung entfällt ein aufwendiger Steuerungsaufwand.

Anhand der beigefügten Zeichnungen soll die Erfindung näher erläutert werden.
Es zeigt:
- Figur 1: eine Draufsicht auf die erfindungsgemäße Vorrichtung,
- Figur 2: einen Schnitt durch die Vorrichtung entlang der Linie A-A aus Fig. 1,

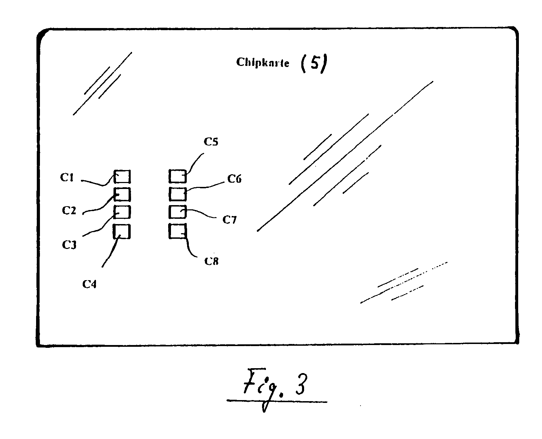

- Figur 3: eine Draufsicht auf eine Chipkarte mit ihren Kontaktflächen,
- Figur 4A: die schematische Darstellung der Draufsicht auf eine zwischen den Positioniermitteln angeordnete Chipkarte,
- Figur 4B: die schematische Darstellung der Seitenansicht einer zwischen den Positioniermitteln angeordneten Chipkarte.

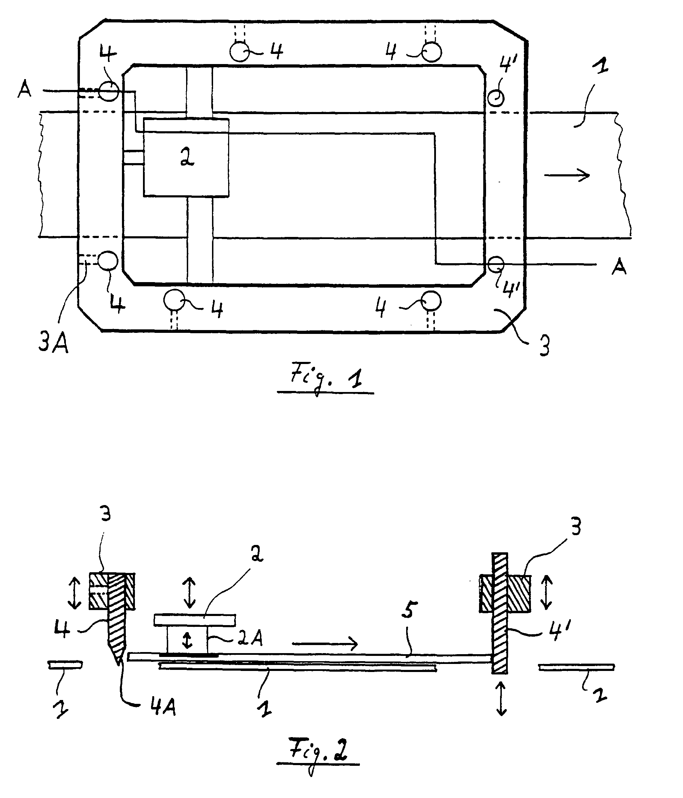

In Figur 1 ist eine Draufsicht auf die erfindungsgemäße Vorrichtung gezeigt. Sie weist eine Halterung (3) auf, an der Positioniermittel (4,4') zur Positionierung der Chipkarte (5) und eine Kontaktiereinheit (2) mit Kontakten (2A) angeordnet sind. Dabei ist die Kontaktiereinheit (2) in einer definierten Position zu den Positioniermitteln (4,4') angeordnet, so daß die Kontakte (2A) der Kontaktiereinheit (2) positionsgenau, fluchtend über den korrespondierenden Kontaktflächen (C) der positionierten Chipkarte (5) liegen.

In der dargestellten Ausführungsform ist die Halterung (3) als im wesentlichen rechteckiger Metallrahmen ausgebildet. Die Halterung (3) selbst ist wiederum in einem Gestell (nicht dargestellt) vertikal verfahrbar angeordnet. Das Verfahren erfolgt pneumatisch. Die Auflagefläche (1) ist in diesem Ausführungsbeispiel von einem Transportband gebildet, das schmaler ist als die Breite der Chipkarte (5).

Im dargestellten Ausführungsbeispiel sind die Positioniermittel (4,4') zylindrische Stifte, wobei für jede Außenkante der Chipkarte (5) jeweils 2 Positionierstifte (4,4') vorgesehen sind, die im Positionierzustand (untere Stellung der Positionierstifte) die jeweilige Außenkante berühren. Die Chipkarte (5) wird in der unteren Stellung von den Positionierstiften (4,4') eingefaßt, und somit positioniert (zentriert für die Kontaktierung).

Die in Transportrichtung der Chipkarte (5) vorderen Positionierstifte (4'), die der vorderen Außenkante der Chipkarte (5) quer zur Transportrichtung zugeordnet sind, sind dabei gegenüber der Halterung (3) vertikal in Richtung auf die Chipkarte (5) und von dieser weg verfahrbar. Zu diesem Zweck sind die Positionierstifte (4') in einer zylindrischen Aussparung verschiebbar gelagert. Das Verfahren dieser Positionierstifte (4') erfolgt pneumatisch.

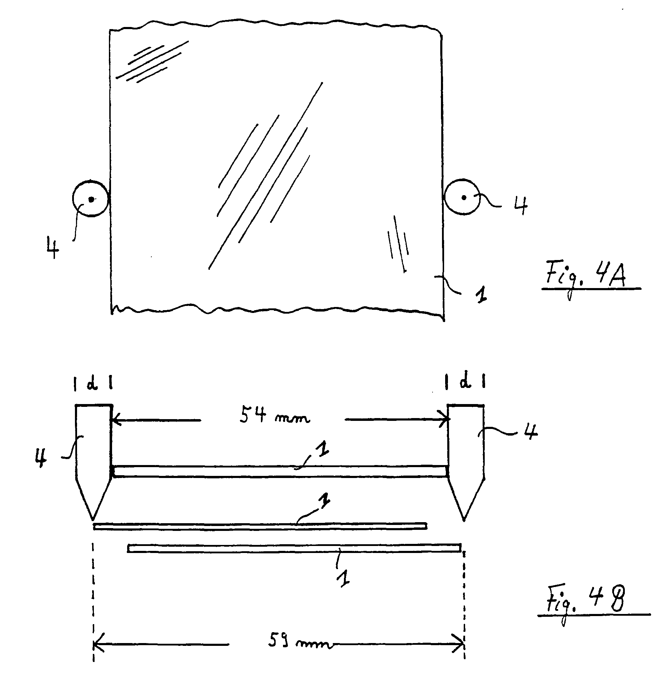

Die anderen Positionierstifte (4) sind unverschiebbar in zylindrischen Aussparungen der Halterung (3) über Arretierschrauben (3A) festgelegt. Diese Positionierstifte (4) sind an ihrem unteren Ende konisch ausgebildet, wodurch eine größere Eingangslagetoleranz für die zu positionierenden Chipkarten (5) ermöglicht wird. Dies wird weiter unten näher anhand von Figur 4A und 4B erläutert.

Zur Kontaktierung einer auf dem Transportband liegend beförderten Chipkarte (5) werden zuerst die Positionierstifte (4') nach unten verfahren, so daß die Chipkarte (5) mit ihrer Außenkante quer zur Transportrichtung gegen diese als Stoppmittel wirkenden Positionierstifte (4') fährt. Sobald diese Positionierstifte (4') ihre untere Endlage erreicht haben, wird das Transportband (1) angehalten. Nun wird die Halterung (3) mit den übrigen Positionierstiften (4) und der Kontaktiereinheit (2) auf die Chipkarte (5) abgesenkt. Bevor die Kontakte (2A) der Kontaktiereinheit (2) die Kartenoberfläche (Kontaktflächen) erreichen, wird die Chipkarte (5) über die sich absenkenden Positionierstifte (4) positioniert, wobei diese die Chipkarte (5) in der unteren Endlage zwischen sich positionsgenau aufnehmen (einfassen). In der unteren Endlage der Halterung (3) werden dann auch die Kontakte (2A) der Kontaktiereinheit (2) federnd gegen die Kartenoberfläche gedrückt an einer Stelle, wo sich bei der positionierten Chipkarte (5) die Kontaktflächen (C) befinden. Für die federnde Lagerung der Kontakte (2A) in der Kontaktiereinheit (2) kann der Fachmann sich im Stand der Technik bedienen.
Nun kann der Datenaustausch zwischen dem Kartenschreib- und Lesegerät (nicht dargestellt) und der Chipkarte (5) erfolgen. Für die Verbindung der Kontaktiereinheit (2) mit dem Kartenschreib- und Lesegerät kann der Fachmann sich ebenfalls bekannter Mittel bedienen (z.B. ein Flachbandkabel). Nach erfolgtem Datenaustausch werden die Positionierstifte (4') sowie die Halterung (3) mit den anderen Positionierstiften (4) und der Kontaktiereinheit (2) nach oben von der Chipkarte (5) weg verfahren, so daß die Chipkarte (5) wieder frei auf dem Transportband (1) liegt und bereit ist für den Weitertransport.

Anhand der Figuren 4 A und 4B soll nun ein weiterer Vorteil der erfindungsgemäßen Vorrichtung erläutert werden. Und zwar besteht dieser Vorteil in einer Toleranz gegenüber der Lageposition der zu positionierenden Chipkarte (5) senkrecht zur Transportrichtung. Durch die an ihrem unteren Ende konisch zulaufenden Positionierstifte (4) werden auch solche Chipkarten (5) für die Kontaktierung richtig positioniert, deren Lage auf dem Transportband senkrecht zur Transportrichtung von einer Ideallinie (z.B. symmetrisch zur Mittellinie) abweicht. Dabei beträgt die Toleranz ± (d/2), wobei "d" den Durchmesser der zylindrischen Positionierstifte (4) bezeichnet. Im dargestellten Fall beträgt der Durchmesser der Positionierstifte (4) beispielsweise 5mm. Damit ergibt sich eine Toleranz von ± 2,5mm. Die genormte minimale Größe der Kontaktflächen (C) beträgt 1,7mm x 2mm, wobei 1,7mm die Breite der Kontaktflächen (C) senkrecht zur Transportrichtung ist. D.h. mit der erfindungsgemäßen Vorrichtung werden sogar Chipkarten (5) deren Ausgangslage wesentlich ungenauer bestimmt ist als die Breite der zu kontaktierenden Fläche sicher positioniert und kontaktiert.

In einer nicht dargestellten Ausführungsform ist für jede Außenkante der Chipkarte lediglich ein Positionierstift vorgesehen, der dann vorzugsweise in der Mitte der Außenkante angeordnet ist.

Anstatt von zylindrischen Positionierstiften können auch plattenförmige Positioniermittel verwendet werden. So ist es auch vorgesehen, zwei rechteckige Positionierwinkel zu verwenden, die korrespondierend zu diagonal gegenüberliegenden Ecken der zu positionierenden Chipkarte angeordnet sind.

Anstatt einer Kontaktiereinheit kann die der Erfindung zugrunde liegende Idee auch zum Zwecke der Bearbeitung von Karten im ISO-Format mit Bearbeitungsmitteln eingesetzt werden, wenn die Bearbeitung an mindestens einer definierten Stelle bezogen auf mindestens ein Außenkante der Karte zu erfolgen hat. Hierauf ist der unabhängige Anspruch 12 gerichtet. Ein derartiges Bearbeitungsmittel kann z.B. ein Stanzwerkzeug zum zumindest teilweisen Freistanzen einer Minichipkarte aus einer sogenannten Fullsize-Karte sein oder ein Abstandsmesser zum Vermessen der Kavität des Kartenkörpers einer Chipkarte.

## Patentansprüche

1. Vorrichtung zur elektrischen Kontaktierung der Kontaktflächen (C) von auf einer horizontalen Auflagefläche (1) aufliegenden Chipkarte (5) mit einem Kartenschreib- und/oder Lesegerät, wobei sowohl die äußeren Abmessungen der Chipkarte (5) als auch die Größe und die Position der elektrischen Kontaktflächen (C) bezogen auf die Außenkanten der Chipkarte (5) standardisiert sind,
**gekennzeichnet durch**
- eine vertikal in Richtung auf die Chipkarte (5) und von dieser weg verfahrbare Kontaktiereinheit (2), die zu den elektrischen Kontaktflächen (C) der Chipkarte (5) korrespondierende Kontakte (2) aufweist, welche mit dem Kartenschreib- und/oder Lesegerät elektrisch verbindbar sind,
- mindestens vier vertikal in Richtung auf die Chipkarte (5) und von dieser weg verfahrbare Positioniermittel (4,4'), die in einer definierten Position zu der Kontaktiereinheit (2) angeordnet sind, wobei in der unteren Stellung dieser Positioniermittel (4, 4') jede gerade Außenkante der Chipkarte (5) von mindestens einem Positioniermittel (4, 4') zur Positionierung berührt wird,
- eine Halterung (3) an der die Kontaktiereinheit (2) und die Positioniermittel (4,4') angeordnet sind.

2. Vorrichtung nach Anspruch 1,
**dadurch gekennzeichnet, daß**
die Halterung (3) in einem Gestell vertikal in Richtung auf die Chipkarte (5) und von dieser weg verfahrbar angeordnet ist.

3. Vorrichtung nach Anspruch 1 oder 2,
**dadurch gekennzeichnet, daß**
zumindest ein Positioniermittel (4') gegenüber der Halterung (3) vertikal in Richtung auf die Chipkarte (5) und von dieser weg verfahrbar ausgebildet ist.

4. Vorrichtung nach einem der vorstehenden Ansprüche,
**dadurch gekennzeichnet, daß**
die Kontaktiereinheit (2) gegenüber der Halterung (3) vertikal in Richtung auf die Chipkarte (5) und von dieser weg verfahrbar ausgebildet ist.

5. Vorrichtung nach einem der vorstehenden Ansprüche,
**dadurch gekennzeichnet, daß**
die Kontakte (2A) der Kontaktiereinheit (2) federnd vertikal verschiebbar in der Kontaktiereinheit (2) angeordnet sind.

6. Vorrichtung nach einem der vorstehenden Ansprüche,
**dadurch gekennzeichnet, daß**
die Positioniermittel (4,4') zumindest teilweise in Form von vertikal sich erstreckenden Stiften ausgebildet sind.

7. Vorrichtung nach einem der vorstehenden Ansprüche,
**dadurch gekennzeichnet, daß**
die Stifte (4) zu ihrem unteren Ende hin konisch ausgebildet sind.

8. Vorrichtung nach einem der vorstehenden Ansprüche,
**dadurch gekennzeichnet, daß**
zumindest ein Positioniermittel (4') zum Stoppen einer auf der horizontalen Auflagefläche (1) transportierten Chipkarte (5) ausgelegt ist.

9. Vorrichtung nach Anspruch 8,
**dadurch gekennzeichnet, daß**
das Positioniermittel (4') zum Stoppen der Chipkarte (5) gegenüber der Halterung (3) vertikal in Richtung auf die Chipkarte (5) und von dieser weg verfahrbar ausgebildet ist.

10. Vorrichtung nach einem der vorstehenden Ansprüche,
**dadurch gekennzeichnet, daß**
dieselbe ein die Auflagefläche bildendes Transportband (1) zum Transport der Chipkarten (5) umfaßt.

11. Vorrichtung zur Positionierung von einer auf einer horizontalen Auflagefläche (1) aufliegenden Karte (5) zum Zwecke der Bearbeitung der Karte mit Bearbeitungsmitteln, wobei die äußeren Abmessungen der Karte 5) mit ihren Außenkanten standardisiert sind und die Bearbeitung an mindestens einer definierten Stelle bezogen auf mindestens eine Außenkante der Karte erfolgt,
**gekennzeichnet durch**
- ein vertikal in Richtung auf die Karte (5) und von dieser weg verfahrbares Bearbeitungsmittel,
- mindestens vier vertikal in Richtung auf die Karte (5) und von dieser weg verfahrbare Positioniermittel (4,4'), die in einer definierten Position zum Bearbeitungsmittel angeordnet sind, wobei in der unteren Stellung dieser Positioniermittel (4, 4') jede gerade Außenkante der Karte (5) von mindestens einem Positioniermittel (4, 4') zur Positionierung berührt wird,
- eine Halterung (3) an der das Bearbeitungsmittel und die Positioniermittel (4,4') angeordnet sind.

12. Vorrichtung nach Anspruch 11,
**dadurch gekennzeichnet, daß**
das Bearbeitungsmittel ein Stanzwerkzeug zum zumindest teilweisen Freistanzen einer Minichipkarte aus der Karte (5) ist.

13. Vorrichtung nach Anspruch 12,
**dadurch gekennzeichnet, daß**
das Bearbeitungsmittel ein Abstandsmesser zum Vermessen der Kavität des Kartenkörpers einer Chipkarte ist.

## Claims

1. Device for electrically contacting the contact areas (C) of a smart card (5) resting on a horizontal bearing surface (1) with a card read/write device, with both the outer dimensions of the smart card (5) as well as the size and the position of the electrical contact areas (C) relative to the outer edges of the smart card (5) being standardized,
**characterized by**
- a contacting unit (2) which can be moved vertically in the direction of and away from the smart card (5) and which has contacts (2) corresponding to the electrical contact areas (C) of the smart card (5) that can be electrically connected to the card read/write device,
- at least four positioning means (4, 4') which can be moved vertically in the direction of and away from the smart card (5) and which are arranged in a defined position relative to the contacting unit (2), wherein in the bottom position of said positioning means (4, 4') each straight outer edge of the smart card (5) is touched by at least one positioning means (4, 4') for positioning,
- a mounting (3) on which the contacting unit (2) and the positioning means (4, 4') are arranged.

2. Device according to Claim 1,
**characterized in that**
the mounting (3) is arranged in a frame such that it can be moved vertically in the direction of and away from the smart card (5).

3. Device according to Claim 1 or 2,
**characterized in that**
at least one positioning means (4') is designed in relation to the mounting (3) such that it can be moved vertically in the direction of and away from the smart card (5).

4. Device according to one of the preceding claims,
**characterized in that**
the contacting unit (2) is designed in relation to the mounting (3) such that it can be moved vertically in the direction of and away from the smart card (5).

5. Device according to one of the preceding claims,
**characterized in that**
the contacts (2A) of the contacting unit (2) are arranged such that they can be vertically moved with a spring action in the contacting unit (2).

6. Device according to one of the preceding claims,
**characterized in that**
the positioning means (4, 4') are designed at least partially in the form of vertically extending pins.

7. Device according to one of the preceding claims,
**characterized in that**
the pins (4) are designed to be conical towards their lower end.

8. Device according to one of the preceding claims,
**characterized in that**
at least one positioning means (4') is designed for stopping a smart card (5) transported on the horizontal bearing surface (1).

9. Device according to Claim 8,
**characterized in that**
the positioning means (4') for stopping the smart card (5) is designed in relation to the mounting (3) such that it can be moved vertically in the direction of and away from the smart card (5).

10. Device according to one of the preceding claims,
**characterized in that**
it includes a conveyor belt (1) that forms the bearing surface for transporting the smart cards (5).

11. Device for positioning a card (5) resting on a horizontal bearing surface (1) for processing said card using processing means, in which the outer dimensions of the card (5) with its outer edges are standardized, and processing takes place at at least one defined position relative to at least one outer edge of the card,
**characterized by**
- a processing means which can be moved vertically in the direction of and away from the card (5),
- at least four positioning means (4, 4') which can be moved vertically in the direction of and away from the card (5) and which are arranged in a defined position relative to the processing means, wherein in the bottom position of said positioning means (4, 4') each straight outer edge of the card (5) is touched by at least one positioning means (4, 4') for positioning,
- a mounting (3) on which the processing means and the positioning means (4, 4') are arranged.

12. Device according to Claim 11,
**characterized in that**
the processing means is a punching tool for at least partially punching a minicard out of the card (5).

13. Device according to Claim 12,
**characterized in that**
the processing means is a distance gauge for measuring the cavity of the card body of a smart card.

## Revendications

1. Dispositif pour mettre en contact électrique les surfaces de contact (C) d'une carte à puce (5), posée sur une surface d'appui (1) horizontale, avec un appareil d'écriture et / ou de lecture de cartes, les dimensions extérieures de la carte à puce (5) tout comme la grandeur et la position des surfaces de contact (C) électriques étant standardisées par rapport aux bords extérieurs de la carte à puce (5),
**caractérisé par**
- une unité de mise en contact (2), verticalement déplaçable en direction de la carte à puce (5) et à l'opposé de celle-ci, laquelle présente des contacts (2) correspondant aux surfaces de contact (C) électriques de la carte à puce (5), lesquels peuvent être reliés électriquement à l'appareil d'écriture et / ou de lecture de cartes,
- au moins quatre moyens de positionnement (4, 4'), verticalement déplaçables en direction de la carte à puce (5) et à l'opposé de celle-ci, lesquels sont ordonnés dans une position définie par rapport à l'unité de mise en contact (2), chaque bord extérieur droit de la carte (5) étant touché par au moins un moyen de positionnement (4, 4') pour le positionnement, quand ces moyens de positionnement (4, 4') sont dans la position inférieure,
- un dispositif de support (3) sur lequel sont agencés l'unité de mise en contact (2) et les moyens de positionnement (4, 4').

2. Dispositif selon la revendication 1,
**caractérisé en ce que**
le dispositif de support (3) est agencé dans un châssis en étant verticalement déplaçable en direction de la carte à puce (5) et à l'opposé de celle-ci.

3. Dispositif selon revendication 1 ou 2,
**caractérisé en ce que**
au moins un moyen de positionnement (4') est conçu de sorte à pouvoir être déplacé, par rapport au dispositif de support (3), verticalement, en direction de la carte à puce (5) et à l'opposé de celle-ci.

4. Dispositif selon l'une des revendications précédentes,
**caractérisé en ce que**
l'unité de mise en contact (2) est conçue de sorte à pouvoir être déplacée, perpendiculairement au dispositif de support (3), en direction de la carte à puce (5) et à l'opposé de celle-ci.

5. Dispositif selon l'une des revendications précédentes,
**caractérisé en ce que**
les contacts (2A) de l'unité de mise en contact (2) sont agencés, déplaçables verticalement, en faisant ressort, dans l'unité de mise en contact (2).

6. Dispositif selon l'une des revendications précédentes,
**caractérisé en ce que**
les moyen de positionnement (4, 4') sont réalisés, au moins partiellement, en forme de broches s'étendant verticalement.

7. Dispositif selon l'une des revendications précédentes,
**caractérisé en ce que**
les broches (4) sont de conception conique vers leur extrémité inférieure.

8. Dispositif selon l'une des revendications précédentes,
**caractérisé en ce que**
au moins un moyen de positionnement (4') est conçu pour stopper une carte à puce (5) transportée sur la surface d'appui horizontale (1).

9. Dispositif selon la revendication 8,
**caractérisé en ce que**
le moyen de positionnement (4') pour stopper la carte à puce (5) est conçu de sorte à pouvoir être déplacé perpendiculairement au dispositif de support (3) dans la direction de la carte à puce (5) et à l'opposé de celle-ci.

10. Dispositif selon l'une des revendications précédentes,
**caractérisé en ce que**
celui-ci comprend une bande de transport (1) qui forme la surface d'appui pour le transport des cartes à puce (5).

11. Dispositif pour le positionnement d'une carte (5) posée horizontalement sur une surface d'appui (1) aux fins de traitement de la carte avec des moyens de traitement, les dimensions extérieures de la carte (5) étant standardisées avec leurs bords extérieurs, et le traitement étant effectué à au moins un endroit défini par rapport à au moins un bord extérieur de la carte,
**caractérisé par**
- un moyen de traitement verticalement déplaçable en direction de la carte (5) et à l'opposé de celle-ci,
- au moins quatre moyens de positionnement (4, 4'), verticalement déplaçables en direction de la carte à puce (5) et à l'opposé de celle-ci, lesquels sont ordonnés dans une position définie par rapport au moyen de traitement, chaque bord extérieur droit de la carte (5) étant touché par au moins un moyen de positionnement (4, 4'), pour le positionnement, quand ces moyens de positionnement (4, 4') sont dans la position inférieure,
- un dispositif de support (3) sur lequel sont agencés le moyen de traitement et les moyens de positionnement (4, 4').

12. Dispositif selon la revendication 11,
**caractérisé en ce que**
le moyen de traitement est un outil d'estampage pour découper par estampage une mini-carte à puce de la carte (5).

13. Dispositif selon la revendication 12,
**caractérisé en ce que**
le moyen de traitement est un dispositif de mesure de distance pour mesurer la cavité du corps d'une carte à puce.
